# EUROPÄISCHE PATENTSCHRIFT

(11) **EP 2 491 777 B1**
(45) Veröffentlichungstag und Bekanntmachung des Hinweises auf die Patenterteilung: **24.07.2019**
(21) Anmeldenummer: 11405217.8
(22) Anmeldetag: 23.02.2011
(51) Int. Cl.: A01B 51/02, B62D 51/06, A01B 33/02

(54) **Selbstfahrende, wenigstens einachsig ausgebildete Arbeitsmaschine**
Self-propelled work machine with at least one axle
Machine de travail automobile dotée d'au moins un essieu

(43) Veröffentlichungstag der Anmeldung: 29.08.2012
(73) Patentinhaber: Rapid Technic AG, 8956 Killwangen (CH)
(72) Erfinder: Keller, Beat, 5620 Bremgarten (CH)
(74) Vertreter: Fenner, Werner

(56) Entgegenhaltungen:
- EP-A1- 0 701 917
- WO-A1-02/102647
- DE-A1-102006 007 370

## Beschreibung

Die Erfindung betrifft eine selbstfahrende, wenigstens einachsig ausgebildete Arbeitsmaschine zum Betreiben und Fortbewegen von Arbeitsgeräten, welche Arbeitsmaschine eine mit einem Verbrennungsmotor antriebsverbundene mechanische oder hydrostatische Antriebseinheit und eine Anbauvorrichtung für vorzugsweise antreibbare Arbeitsgeräte aufweist, und vorwärts resp. rückwärts in eine entgegengesetzte Fortbewegungsrichtung umschaltbar ist, und zur manuellen Führung eine aus zwei, jeweils einer Hand einer Bedienungsperson zugeordnete Bedienungsgriffe bestehenden, auslegerartige Führungsorgane zur Anordnung von Betätigungsorganen für die Einstellung oder Änderung der Fortbewegungsrichtung und/oder der Fortbewegungsgeschwindigkeit der Arbeitsmaschine sowie gegebenenfalls der angebauten Arbeitsgeräte aufweist, wobei Räder an einer quer zur Fortbewegungsrichtung angeordnete Fahrachse vorgesehen sind, wobei die Arbeitsgeräte mit der Antriebseinheit verbunden sind, wobei wenigstens der eine Bedienungsgriff mit einer bei Loslösung der einen Hand von dem Bedienungsgriff durch ein Betätigungsorgan die Antriebseinheit wirkungslos schaltende resp. den Antriebsmotor abschaltende selbsttätige Totmann-Schaltvorrichtung verbunden ist.

Arbeitsmaschinen der eingangs beschriebenen Art werden in der Landwirtschaft, im Landschafts- und Gartenbau und in kommunalen Pflege- und Unterhaltsbetrieben eingesetzt. Sie eignen sich zum Anbau von Bodenbearbeitungsgeräten, Schneeräumgeräten, beispielsweise Schneepflug oder Schneefräse, Mähwerke, Kehrmaschinen und Anhängefahrzeuge, beispielsweise Treibachsanhänger. Zum Antrieb der Geräte ist vorzugsweise eine Zapfwelle vorgesehen, die mit der Abtriebswelle einer Antriebseinheit gekuppelt ist, mit der auch eine Hydraulikpumpe und Hydraulikmotoren für den Antrieb der Fahrachse der Arbeitsmaschine antriebsverbunden sind. Bekanntlich kann die Antriebseinheit durch mechanische Getriebe oder durch einen hydrostatischen Antrieb ausgebildet und mit einem Verbrennungsmotor gekuppelt sein, wobei die verwendete Kupplung mechanisch, elektrisch oder hydraulischen zu betreiben sein kann. Die Arbeitsmaschine kann durch ein an Führungsorganen angeordnetes Betätigungsorgan vorwärts- und zurückbewegt werden, wozu die Führungsorgane als etwa in Fahrtrichtung sich erstreckende Führungsholme oder als ein mit einem zentralen Längsträger verbundene, sich etwa quer zur Fahrtrichtung erstreckende, einen Lenker bildende Lenkarme ausgebildet sein können, wie beispielsweise in der WO 02/102647 A1 dargestellt. Ob Führungsholme oder Lenker, an den der Bedienungsperson zugewandten Extremitäten sind Bedienungsgriffe angeordnet, an denen zur Einstellung oder Aenderung der Fortbewegungsrichtung oder -geschwindigkeit der Arbeitsmaschine, gegebenenfalls den angebauten Arbeitsgeräten zugeordnete Betätigungsorgane befestigt sind.

Selbstverständlich könnte die Fahrachse der Arbeitsmaschine auch nach dem durch die CH 696'511 A5 vermittelten Prinzip ausgebildet sein, welches zur Lenkung oder Führung einer Arbeitsmaschine eine aus zwei jeweils seitlich eines Fahrgestells angeordneten Achstummeln gebildeten Fahrachse besteht, wobei jedem Achsstummel zum Radantrieb ventilgesteuerte Hydraulikmotoren zugeordnet sind, sodass zur Lenkung der Arbeitsmaschine die Räder in unterschiedliche Drehzahlen versetzbar sind.
Die Räder zur Fortbewegung der Arbeitsmaschine sind an einer quer zur Fortbewegungsrichtung angeordneten, Teil eines Fahrgestells bildenden Fahrachse der Arbeitsmaschine befestigt, die, wie gegebenfalls das angebaute Arbeitsgerät über eine Zapfwelle mit der Antriebseinheit verbunden sind.
Als Sicherheit und Schutz gegen Unfälle, insbesondere gegen Personenschäden ist der eine Bedienungsgriff der Führungsorgane mit einer manuell betätig- resp. auslösbaren Totmann-Schaltvorrichtung ausgestattet, die beim Loslösen der zugeordneten Bedienerhand von dem Bedienungsgriff den Antriebsmotor selbsttätig abschaltet resp. die Antriebseinheit selbsttätig wirkungslos schaltet. Hierzu ist am Bedienungsgriff ein gegen eine Rückstellkraft, vorzugsweise eine Federkraft, an den Bedienungsgriff andrückbarer Totmann-Hebel vorgesehen, den die Rückstellkraft beim Loslösen der Bedienerhand an dem Bedienungsgriff anhebt und gleichzeitig den Motor abstellt oder die Antriebseinheit wirkungslos macht. Es wird diesbezüglich auf die Prospekte mit den einachsigen Arbeitsmaschinen Rapid REX 09/09/1000/de/ba und Rapid SWISS 04/09/2000/de verwiesen, die auf den vielseitigen Betrieb der gezeigten Arbeitsmaschinen hinweisen.

Die DE 44 32 936 A1 vermittelt eine Totmanneinrichtung, insbesondere für mitgängergeführte und/oder handgehaltene motorbetriebene Bearbeitungsmaschinen mit mindestens einem Handgriff zum Führen und/oder Halten der Maschine, einem Sicherheitskreis und einer Auswertelektronik mit zugehöriger Schaltung. Bei der beschriebenen Bearbeitungsmaschine ist beim Starten des Motors die Kupplung zu ziehen, sodass der Sicherheitskreis, bestehend aus Relais und Kupplungsschalter unterbrochen wird. Wenn bei laufendem Motor die Arbeit begonnen wird, muss ein Griff, der (offensichtlich) der Totmanneinrichtung zugeordnet ist, angefasst werden, d.h., um zumindest über den Griff der Totmanneinrichtung oder über den Griff der Kupplung den Motor abstellen zu können. Werden beide Griffe losgelassen, schaltet der Motor (ohnehin) sofort ab. Eine solche Anordnungs- und Betriebsweise bietet jedoch keine vollständige Sicherheit bei der Bedienung der Bearbeitungsmaschine, speziell dann, wenn die Maschine festsitzt oder ein Arbeitsgerät im Stillstand der Maschine verstellt werden muss.

Die vorveröffentlichte DE 10 2006 007 370 A1 betrifft eine Arbeitsmaschine nach der eingangs beschriebenen Art, die bei einem hydraulischen Antrieb der Räder der Arbeitsmaschine eine Lösung für die Anpassung an den Fahrtrichtungssinn und für die Beibehaltung der Bedienungsfunktion für die Lenkung und die Fahrgeschwindigkeit bei Änderung des Fahrtrichtungssinns bietet.

Die EP 0 701 917 A1 offenbart eine Totmanneinrichtung, insbesondere für mitgängergeführte und/oder handgehaltene motorbetriebene Bearbeitungsmaschinen, mit mindestens einem Handgriff zum Führen und/oder Halten der Maschine.

Es ist deshalb Aufgabe der vorliegenden Erfindung, eine Arbeitsmaschine der eingangs genannten Art zu schaffen, die während dem Betrieb eine hohe Sicherheit und Zuverlässigkeit für Mensch, Maschine und Umgebung gewährleistet, insbesondere dann, wenn durch die Bedienungsperson eine Aenderung an der Arbeitsmaschine und/oder einem angebauten Arbeitsgerät vorzunehmen ist; beispielsweise beim Verstellen des Auswurfkamins einer Schneefräse oder wenn ein unerwarteter Arbeitsumstand eintritt.

Erfindungsgemäss wird die Aufgabe gelöst durch die Merkmalskombination von Anspruch 1.

Mit der dadurch erreichten Sicherheit und Zuverlässigkeit lassen sich zumindest einachsige Arbeitsmaschinen, die manuell zu führen sind, aus- oder nachrüsten.

Vorzugsweise ist der andere Bedienungsgriff zur Geschwindigkeitseinstellung oder - änderung der Arbeitsmaschine vorgesehen, während der erstgenannte, mit einer Totmann-Schaltung versehene Bedienungsgriff zur wahlweisen Anbringung einer Feststellbremse, einer Zapfwellen-Schaltvorrichtung und/oder weiterer Betätigungsorgane verfügbar ist. Selbstverständlich können die Bedienungsgriffe zur ergonomischen Anpassung an den Maschinenführer, und die Führungsorgane zur gesteuerten Lenkung der Arbeitsmaschine ausgebildet sein.

Die Arbeitsmaschine zeichnet sich besonders dadurch aus, wenn sie mit einem an dem anderen Bedienungsgriff gelagerten und um diesen verdrehbaren, mit einem Betätigungorgan zur Geschwindigkeitseinstellung oder -änderung verbundenen Drehgriff ausgestattet ist, der die Arbeitsmaschine feinfühlig und sicher Fortbewegen und Begleiten lässt, wobei der Drehgriff an einem auf einem Längsabschnitt des Bedienungsgriffs resp. eines Führungsorgans quer zur Drehachse des Drehgriffs gegen eine den Totmann-Effekt auslösende Rückstellkraft, beispielsweise eine Feder, schwenkbaren Träger oder Hebel angeordnet ist und zur Betätigung eines an dem Bedienungsgriff befestigten, vorzugsweise elektrischen Schalters eine Betätigungsvorrichtung der Totmann-Schaltvorrichtung aufweist. Eine Kombination des Drehgriffs mit der Totmann-Funktion an einem Bedienungsgriff wie vorgeschlagen, bietet einen hohen Bedienungskomfort und Sicherheit für den Maschinenführer. Es lassen sich dadurch von dem anderen Bedienungsgriff aus mit einer Hand die Geschwindigkeit, die Fortbewegungsrichtung der Arbeitsmaschine situationsentsprechend anhalten oder anpassen, so dass die andere Hand zur Betätigung der Arbeitgeräte frei bleibt, beispielsweise für das Verstellen eines Auswurfkamins einer Schneefräse oder für das Umfahren resp. Ausweichen von entlang eines mit Objekten, Fahrzeugen etc. verstellten Fahrweges.

Vorteilhaft ist der schwenkbare Träger als zylindrisches Rohr und der Bedienungsgriff entlang des Trägers sich zum Drehgriff hin vorzugsweise konisch verjüngend ausgebildet und kann bei der Montage auf einfache Weise auf den Bedienungsgriff geschoben und schwenkbar arretiert werden.

Es erweist sich als vorteilhaft und schützt die Ausführungsform, wenn der an dem Bedienungsgriff befestigte Schalter und die Betätigungsvorrichtung innerhalb des Drehgriffs angeordnet sind, so dass eine eindeutige Funktionstrennung entsteht.

Es eignet sich in besonderer Masse für eine kompakte Ausbildung von Drehgriff und Totmann-Schaltvorrichtung, wenn der Drehgriff auf einer mit einem Kegelrad oder Schneckenrad des zur Geschwindigkeitseinstellung oder -änderung vorgesehenen Betätigungsorgans, beispielsweise einem Bauden- oder Seilzug, ausgebildeten, auf dem Träger resp. zylindrischen Rohr gelagerten Hohlwelle befestigt ist.

Es erweist sich sowohl herstelltechnisch wie montierbar als einfach, wenn das als Träger ausgebildete schwenkbare Rohr in Längsrichtung des sich erstreckenden anderen Bedienungsgriffs auf diesen aufgeschoben werden kann und wenn im Bereich des Schalters eine Oeffnung an dem Rohr zur Befestigung des Schalters an dem Bedienungsgriff vorgesehen ist, über die die an dem Rohr befestigte Schaltvorrichtung ragt, wobei der Schalter nach dem Aufschieben des Rohres auf den anderen Bedienungsgriff durch die Oeffnung an dem Rohr an dem Bedienungsgriff befestigt wird.

Vorzugsweise ist einer Arbeitsmaschine an jedem Bedienungsgriff resp. Führungsorgan eine Totmann-Schaltvorrichtungen zugeordnet, so dass zur Inbetriebsetzung und zum Betrieb der Arbeitsmaschine wenigstens eine Totmann-Schaltvorrichtung mit dem Antriebsmotor oder der Antriebseinheit wirksam verbunden ist.

Ueberdies ist es durchaus möglich, den Drehgriff mit der Totmann-Schaltvorrichtung des einen Bedienungsgriffs an dem von der Bedienungsperson der Arbeitsmaschine aus betrachtet wahlweise an dem linken oder dem rechten Führungsorgan anzuordnen.

Die Arbeitsmaschine ist zweckmässig so gesteuert resp. ausgelegt, dass beim Anlassen oder im Betrieb von den Totmann-Schaltvorrichtungen wenigstens eine mit der Antriebseinheit resp. dem Antriebsmotor wirksam verbunden resp. eingeschaltet ist.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: eine räumliche Darstellung der erfindungsgemässen Arbeitsmaschine,
- Fig. 2: eine Darstellung der für einen Drehgriff vorgesehenen Einzelteile einer Totmann-Schaltvorrichtung,
- Fig. 3: einen Längsschnitt durch einen Bedienungsgriff mit Drehgriff und betätigter Totmann-Schaltvorrichtung,
- Fig. 4: einen auszugsweise vergrösserten Längsschnitt durch den in Fig. 3 gezeigten Bedienungsgriff gemäss eingekreistem Detail A,
- Fig. 5: einen Längsschnitt durch einen Bedienungsgriff mit Drehgriff und nicht betätigter Totmann-Vorrichtung und
- Fig. 6: einen auszugsweise vergrösserten Längsschnitt durch den in Fig. 5 gezeigten Bedienungsgriff gemäss eingekreistem Detail B.

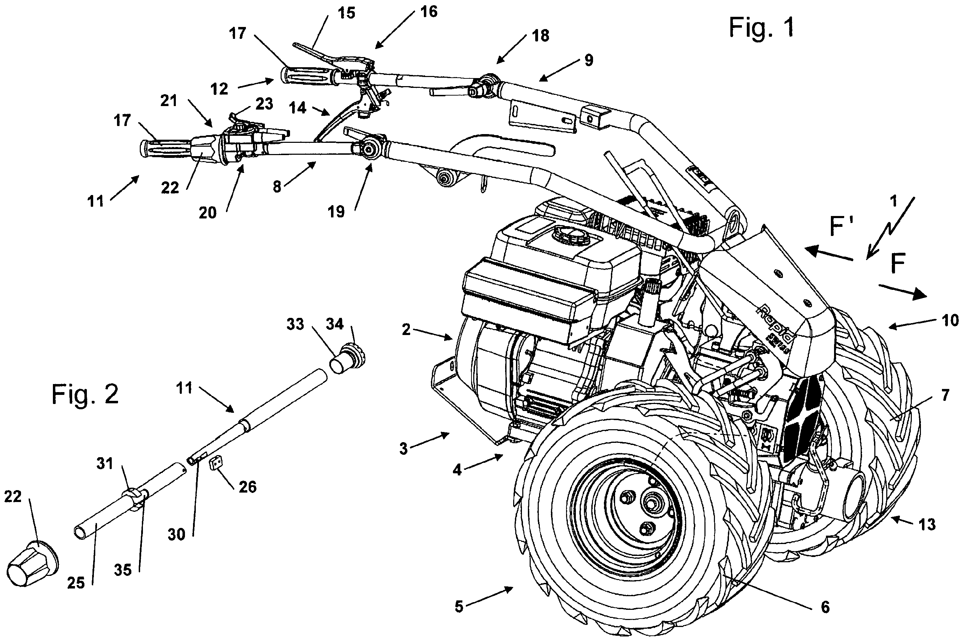

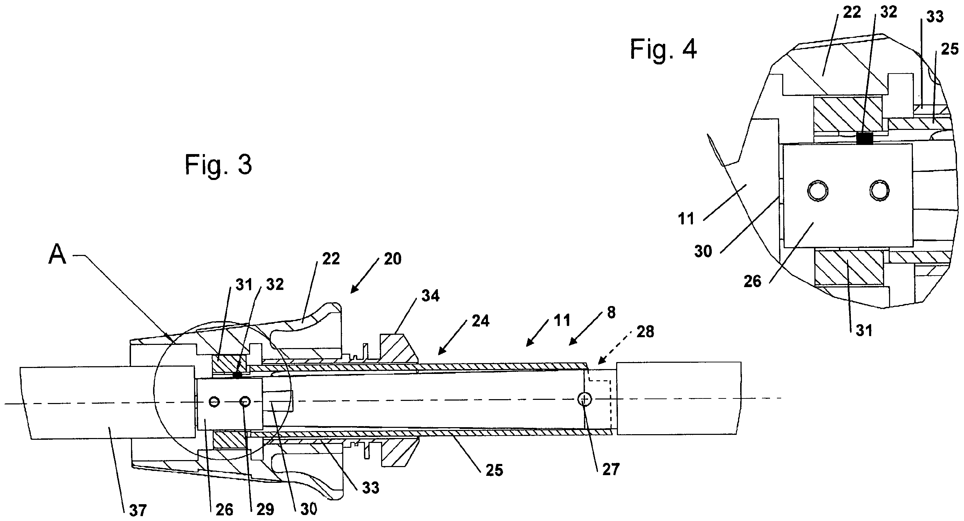

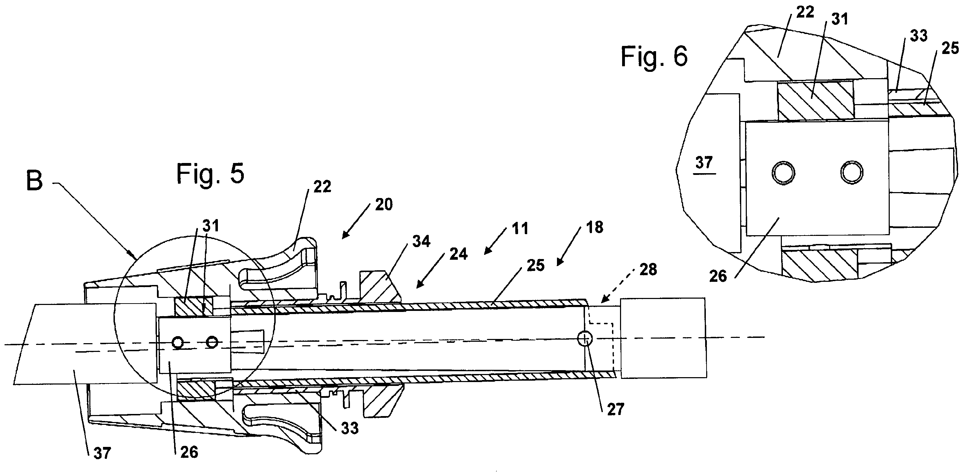

Fig. 1 veranschaulicht eine moderne selbstfahrende, einachsige Arbeitsmaschine 1 zum Betreiben und Fortbewegen von front- und/oder heckseitig anbaubaren, zuschaltbaren Arbeitsgeräten (nicht ersichtlich), die eine mit einem Antriebsmotor, vorzugsweise einem Verbrennungsmotor 2 antriebsverbundene Antriebseinheit 3 aufweist, mit der die an einer mit einem Fahrgestell 4 verbundenen Fahrachse 5 befestigten Räder 6, 7 und die anbaubaren Arbeitsgeräte -bei Bedarf- mechanisch oder hydrostatisch angetrieben werden. Die Arbeitsmaschine 1 kann sowohl in Richtung F vorwärts als auch in die Gegenrichtung F' fortbewegt werden. Zur begleiteten Führung der Arbeitsmaschine 1 durch einen Maschinenführer sind Führungsorgane 8, 9 vorgesehen, die mit dem Fahrgestell 4 und einer Steuerventileinheit 10, der beim Ausführungsbeispiel vorgesehenen hydrostatischen Antriebseinheit 3 verbunden sind. Die Führungsorgane 8, 9 sind durch holmartige Lenker ausgebildet, die jeweils an den freien Enden Bedienungsgriffe 11, 12 zur manuellen Führung, Lenkung und Betätigung der Arbeitsmaschine 1 aufweisen. Das Lenken der Arbeitsmaschine erfolgt vorliegend mittels hydrostatischer Vorrichtung über die Steuereinheit 10, die Antriebseinheit 3 sowie den Rädern 6, 7 zugeordnete, von einer Pumpe versorgten Hydromotoren. An der Vorderseite weist die Arbeitsmaschine 1 eine zu- und abschaltbare, geschützte Zapfwelle 13 zur Koppelung mit den Antrieben anbaubarer Arbeitsgeräte auf. Der von der Bedienperson aus betrachtet linke Bedienungsgriff 12 des Führungsorgans 9 ist mit einem mittels linker Hand zu betätigenden Bremshebel 14 einer auf die Räder 6, 7 resp. die Fahrachse 5 wirkenden Feststellbremse und einem Totmannhebel 15 -adäquat zu einem Totmannpedal einer Elektrolokomotiveeiner Totmann-Schaltvorrichtung 16. Beim Erfassen des Bedienungsgriffs 12 am befestigten Handgriff 17 wird der Totmannhebel 15 mitumfasst und an den Handgriff 17 angelegt. Nun kann der Antriebsmotor 2 resp. die Antriebseinheit 3 der Arbeitsmaschine 1 gestartet und in Betrieb gehalten werden, solang der Totmannhebel 15 am Handgriff 17 ansteht. Sobald die Hand vom Handgriff 17 resp. Totmannhebel 15 gelöst wird, stellt der Antriebsmotor 2 ab resp. die Antriebseinheit 3 wird wirkungslos geschaltet. Nach neuen Erkenntnissen ist es zweckmässig, den Antriebsmotor 2 nach Einsetzen der Totmann-Schaltvorrichtung weiterdrehen zu lassen und die Antriebseinheit 3 wirkungslos zu schalten, damit in einer festsitzenden Situation der Arbeitsmaschine diese durch spezielle Manipulationen wieder freigesetzt resp. ausgehoben werden kann.
In Fig. 1 erkennt man weiterhin an dem linken und dem rechten Führungsorgan 8, 9 eine Verstellvorrichtung mit einem Klemmhebel 18 zur ergonomischen Anpassung der Führungsorgane 8, 9 an die Körpermasse einer Bedienungsperson. Der andere, der rechten Hand der Bedienungsperson zugeordnete Bedienungsgriff 11 ist durch eine weitere, mit der Antriebseinheit 3 oder dem Antriebsmotor 2 verbundene, gleichwirkende Totmann-Schaltvorrichtung 20 ausgebildet. Dieser Bedienungsgriff 11 an dem Führungsorgan 8 ist insbesondere für ein zur Geschwindigkeitseinstellung oder -änderung der Arbeitsmaschine 1 vorgesehenes Betätigungsorgan 21 ausgebildet.
Dieses Betätigungsorgan 21 weist vor dem mit einem Handgriff 17 versehenen Ende des Bedienungsgriffs 11 einen Drehgriff 22 auf, mit dem die Fortbewegungs- resp. Arbeitsgeschwindigkeit einstell- und/oder verstellbar ist. Mittels eines Einstell- oder Gashebels 23 kann die Drehzahl des Antriebsmotors 2 eingestellt werden. Nach dem Anlassen mittels Seilzug oder batterieunterstützter Anlassvorrichtung wird die Motordrehzahl und die für die Anbaugeräte vorgesehene Drehzahl mit dem Einstellhebel 23 und die Fortbewegungsgeschwindigkeit über den Drehgriff 22 bestimmt. Bei der Ausgestaltung des Bedienungsgriffs 11 mit einem Drehgriff 22 und der Totmann-Schaltvorrichtung 20, ist der Drehgriff 22 gemäss den Fig. 2 bis 6 an einem auf einem Längsabschnitt 24 des Bedienungsgriffs 11 quer zur Drehachse des Drehgriffs 22 gegen eine Rückstellkraft schwenkbaren Träger 25 angeordnet, der zur Betätigung eines an dem Bedienungsgriff 11 angebrachten elektrischen Schalters 26 einer Betätigungsvorrichtung vorgesehen ist. Der Teil des Führungsorgans 8 bildende Bedienungsgriff 11 ist zum Drehgriff 22 hin sich konisch verjüngend ausgebildet, so dass der als zylindrisches Rohr ausgestaltete Träger 25 an dem Bedienungsgriff 11 um eine quer zur Längsachse letzterens an einem den Bedienungsgriff 11 durchsetzenden Zylinderstift schwenkbar ist. Dabei ist das dem Zylinderstift 27 zugeordnete Ende des Trägers 25 mit einer annähernd halbkreisförmigen Ausnehmung 28 und einem leicht grösseren Innendurchmesser als der Bedienungsgriff 11 am Umfang versehen, damit der Träger 25 eine, vorzugsweise senkrechte Schwenkbewegung ausüben kann.
Zur Befestigung des Schalters 26, beispielsweise ein Mikroschalter, mittels den angedeuteten Schrauben 29, ist an das Ende des sich konisch verjüngenden Abschnitts des Bedienungsgriffs 11 eine Befestigungsfläche 30 vorgesehen (siehe Fig. 2 und 4). Das hintere Ende des Bedienungsgriffs 11 resp. des Führungsorgans 8 ist wie in Fig. 1 erkennbar mit einem Handgriff 17 ausgestattet. Zur Betätigung des Schalters 26, der im Innern des Drehgriffs 22 angeordnet ist, weist dieser eine Betätigungsvorrichtung 31 auf. Diese ist gabelförmig ausgebildet und am Umfang des Trägers 25 befestigt und ragt über den Schalter 26, der ein der Betätigungsvorrichtung 31 zugewandtes Schaltorgan 32 besitzt. Das Schaltorgan 32 wird von einer im Schalter 26 angeordneten Feder (nicht ersichtlich) gegen die Betätigungsvorrichtung 31 gedrückt und hebt den mit dem Träger 25 verbundenen Drehgriff 22 in die Totmann-Stellung an, in der der Antriebsmotor 2 abgestellt oder die Antriebseinheit 3 wirkungslos geschaltet ist. Zur Inbetriebnahme der Arbeitsmaschine 1 wird der Träger 25 durch den Drehgriff 22 nach unten gedrückt, sodass die Totmann-Schaltvorrichtung 20 ausgeschaltet ist (siehe Fig. 5 und 6).
Gemäss den Fig. 3 und 5 ist der Drehgriff 22 an einer auf dem Träger 25 verdrehbaren Hohlwelle 33 axial unverschiebbar befestigt. Am vorderen, aus dem Drehgriff 22 ragenden Ende ist an der Hohlwelle 33 ein Kegelrad 34 befestigt, das mit einem die Fördermenge der Hydraulikpumpe und die Fortbewegungsrichtung einstellenden, zweiten Kegelrad (nicht ersichtlich) kämmt. Das zweite Kegelrad ist mit einer koaxial gelagerten Umlenkrolle antriebsverbunden, die Teil eines Seilzuges ist, der durch den Drehgriff 22 verstellt wird und mit dem die Drehzahl und Drehrichtung der Hydraulikpumpe der Antriebseinheit, also die Fortbewegungsgeschwindigkeit und - richtung verstellt werden kann.
Selbstverständlich könnte dieser Vorgang auch elektrisch/elektronisch vorgenommen werden.
Da der am Führungsorgan 8 resp. am Bedienungsgriff 11 befestigte Schalter 26 über den Umfang des Trägers 25 resp. das Rohr vorsteht, ist an letzterem eine Oeffnung 35 vorgesehen, durch welche der Schalter 26 nach der Montage des am Bedienungsgriff 11 resp. dem Führungsorgan 8 aufgeschobenen Trägers 25 hindurchgeführt und mittels Schrauben 29 am Bedienungsgriff 11 befestigt wird.
Die Montage der Betätigungsvorrichtung 31 kann gemeinsam mit dem Drehgriff 22 an dem Träger 25 oder zuvor erfolgen.
Sollte das für den Handgriff bestimmte Ende des Bedienungsgriffs 11 den gleichen Querschnitt wie an dem abgewandten Ende aufweisen, dann ist der mit dem Handgriff versehene Teil 37 des Bedienungsgriffs 11 mit dem für den Träger 25 bestimmten Teil resp. Längsabschnitt 24 des Bedienungsgriffs 11 koaxial zusammenzusetzen, wozu beispielsweise ein nicht dargestellter Gewindezapfen am Handgriffteil 37 befestigt ist.

Das in Fig. 3 eingekreiste Detail A ist in Fig. 4 vergrössert dargestellt und zeigt wie in Fig. 3 die Situation, in der die Bedienerhand vom Bedienungsgriff 11 resp. Handgriffteil 37, insbesondere von Drehgriff 22 losgelöst ist, so dass der Drehgriff 22 resp. der Träger 25 durch das unter Federdruck stehende Schaltorgan 32 hochgeschwenkt wird und damit die Wirkung der Totmann-Schaltvorrichtung 20 erreicht ist. Auch das Betätigungsorgan 21 für die Fortbewegungs- resp. Arbeitsgeschwindigkeit der Arbeitsmaschine 1 bleibt wirkungslos.

Die Fig. 5 zeigt die Totmann-Schaltvorrichtung 20 in der Betriebsstellung der Arbeitsmaschine 1, bei der eine resp. die rechte Hand der Bedienperson den Bedienungsgriff 11 resp. den Handgriffteil 37, insbesondere den Drehgriff 22 er- resp. umfasst. Die Arbeitsmaschine 1 kann nun gestartet und betrieben werden. Diese Situation resp. das eingekreiste Detail B ist in Fig. 6 vergrössert dargestellt. Das Schaltorgan 32 resp. der Schaltstift ist gegen den Federdruck in den Schalter 26 zurückgedrängt, sodass die Arbeitsmaschine 1 betrieben resp. in Betrieb gehalten wird; der Träger 25 liegt dabei an dem Längsabschnitt des Bedienungsgriffs 11 an.

Die Fig. 2 vermittelt mit einer Auslegeordnung die oben beschriebenen, wesentlichen Einzelteile des Bedienungsgriffs 11 mit einem Drehgriff 22 zur Einstellung und Aenderung der Fortbewegungs- resp. Arbeitsgeschwindigkeit der Arbeitsmaschine 1.

Bei einer Arbeitsmaschine mit auf die Führungsorgane 8, 9 verteilten Totmann-Schaltvorrichtungen 16, 20 sind diese so gesteuert resp. installiert, dass zum Betrieb der Arbeitsmaschine 1 wenigstens eine Totmann-Schaltvorrichtung 16, 20 in Funktion gesetzt ist, d.h., durch Betätigung des Maschinenführers ausser Wirkung gesetzt ist.

## Patentansprüche

1. Selbstfahrende, wenigstens einachsig ausgebildete Arbeitsmaschine (1) zum Betreiben und Fortbewegen von Arbeitsgeräten, welche Arbeitsmaschine (1) eine mit einem Verbrennungsmotor (2) antriebsverbundene mechanische oder hydrostatische Antriebseinheit (3) und eine Anbauvorrichtung für vorzugsweise antreibbare Arbeitsgeräte aufweist, und vorwärts resp. rückwärts in eine entgegengesetzte Fortbewegungsrichtung (F, F') umschaltbar ist, und zur manuellen Führung eine aus zwei, jeweils einer Hand einer Bedienungsperson zugeordnete Bedienungsgriffe (11, 12) bestehenden, auslegerartige Führungsorgane (8, 9) zur Anordnung von Betätigungsorganen für die Einstellung oder Änderung der Fortbewegungsrichtung und/oder der Fortbewegungsgeschwindigkeit der Arbeitsmaschine (1) sowie gegebenenfalls der angebauten Arbeitsgeräte aufweist, wobei Räder (6, 7) an einer quer zur Fortbewegungsrichtung (F, F') angeordneten Fahrachse (5) vorgesehen sind, wobei die Arbeitsgeräte mit der Antriebseinheit (3) verbunden sind, wobei wenigstens der eine Bedienungsgriff (12) mit einer bei Loslösung der einen Hand von dem Bedienungsgriff (12) durch ein Betätigungsorgan (21) die Antriebseinheit (3) wirkungslos schaltende resp. den Antriebsmotor (2) abschaltende selbsttätige Totmann-Schaltvorrichtung (16) verbunden ist, **dadurch gekennzeichnet, dass** der andere Bedienungsgriff (11) durch eine weitere, mit der Antriebseinheit (3) oder dem Antriebsmotor (2) verbundene, gleichwirkende Totmann-Schaltvorrichtung (20) ausgebildet ist, wobei die weitere Totmann-Schaltvorrichtung (20) an einem mit einem Betätigungsorgan zur Geschwindikeitseinstellung oder -änderung verbundenen und dem anderen Bedienungsgriff (11) gelagerten und um diesen verdrehbaren Drehgriff (22) ausgebildeten Bedienungsgriff (11) vorgesehen ist, wobei der Drehgriff (24) an einem auf einem Längsabschnitt (24) des anderen Bedienungsgriffs (11) quer zur Drehachse des Drehgriffs (22) gegen eine Rückstellkraft schwenkbaren Träger (25) angeordnet ist und zur Betätigung eines an dem Bedienungsgriff (11) befestigten, vorzugsweise elektrischen, Schalter (26) eine Betätigungsvorrichtung (31) aufweist.

2. Arbeitsmaschine nach Anspruch 1, **dadurch gekennzeichnet, dass** der schwenkbare Träger (25) als zylindrisches Rohr über den entlang des Trägers (25) sich zum Drehgriff (22) hin vorzugsweise konisch verjüngenden Bedienungsgriff (11) schiebbar ausgebildet ist.

3. Arbeitsmaschine nach Anspruch 1 oder 2, **dadurch gekennzeichnet, dass** der an dem Bedienungsgriff (11) befestigte Schalter (26) und die Betätigungsvorrichtung (31) innerhalb des Drehgriffs (22) angeordnet sind.

4. Arbeitsmaschine nach einem der Ansprüche 1 bis 3, **dadurch gekennzeichnet, dass** der Drehgriff (22) auf einer mit einem Kegelrad (34) oder Schneckenrad des zur Geschwindigkeitseinstellung und/oder -änderung der Arbeitsmaschine (1) vorgesehenen Betätigungsorgan (31) ausgebildeten, auf dem Träger (25) drehbar gelagerten Hohlwelle (33) befestigt ist.

5. Arbeitsmaschine nach einem der Ansprüche 1 bis 4, **dadurch gekennzeichnet, dass** das als Träger (25) ausgebildete Rohr in Längsrichtung des sich erstreckenden Bedienungsgriffs (11) auf diesen aufgeschoben ist und im Bereich des Schalters (26) eine Öffnung (35) zur Befestigung des Schalters (26) an dem Bedienungsgriff (11) aufweist, über welche Öffnung die an dem Rohr (25) befestigte Betätigungsvorrichtung (31) ragt.

## Claims

1. Self-propelled, at least single-axle working machine (1) for driving and moving implements, which working machine (1) comprises a mechanical or hydrostatic drive unit (3) operatively connected to an internal combustion engine (2) and a mounting device for preferably drivable implements, can be switched over from a forward or backward direction of movement to the opposite direction of movement (F, F') and for manual guiding comprises cantilever-like guide elements (8, 9) consisting of two operating handles (11, 12) each associated with one hand of an operator for the arrangement of actuating elements for setting or changing the direction of movement and/or the speed of movement of the working machine (1) and possibly the mounted implements, wherein wheels (6, 7) are provided on an axle (5) arranged transversely to the direction of movement (F, F'), wherein the implements are connected to the drive unit (3) and wherein at least one operating handle (12) is connected to an automatic dead man's control (16) deactivating the drive unit (3) or switching off the drive motor (2) by means of an actuating element (21) when one hand is removed from the operating handle (12), **characterised in that** the other operating handle (11) is formed by a further dead man's control (20) acting in the same manner connected to the drive unit (3) or the drive motor (2), wherein the further dead man's control (20) is provided on an operating handle (11) designed with a twist handle (22) mounted on the other operating handle (11), rotatable about the latter and connected to an actuating element for setting or changing the speed and wherein the twist handle (22) is arranged on a support (25) on a longitudinal portion (24) of the other operating handle (11) pivotable against a restoring force transversely to the axis of rotation of the twist handle (22) and comprises an actuating device (31) for actuating a preferably electrical switch (26) secured to the operating handle (11).

2. Working machine according to claim 1, **characterised in that** the pivotable support (25) is designed as a cylindrical tube that can be slipped over the operating handle (11) preferably tapering towards the twist handle (22) along the support (25).

3. Working machine according to claim 1 or claim 2, **characterised in that** the switch (26) secured to the operating handle (11) and the actuating device (31) are arranged within the twist handle (22).

4. Working machine according to one of claims 1 to 3, **characterised in that** the twist handle (22) is mounted on a hollow shaft (33) pivotably mounted on the support (25) and designed with a bevel gear (34) or worm gear of the actuating element (31) provided for setting and/or changing the speed of the working machine (1).

5. Working machine according to one of claims 1 to 4, **characterised in that** the tube designed as a support (25) is slipped on to the operating handle (11) in the longitudinal direction thereof and is provided in the region of the switch (26) with an opening (35) for securing the switch (26) to the operating handle (11), the actuating device (31) secured to the tube (25) projecting beyond the said opening.

## Revendications

1. Machine de travail automobile (1), dotée d'au moins un essieu, pour faire fonctionner et avancer des appareils de travail, laquelle machine de travail (1) présente une unité d'entraînement mécanique ou hydrostatique (3) connectée par entraînement à un moteur à combustion interne (2) et un dispositif d'attelage pour des appareils de travail de préférence pouvant être entraînés, et laquelle peut être commutée en marche avant, respectivement en marche arrière dans une direction d'avance opposée (F, F'), et présente, pour le guidage manuel, un organes de guidage (8, 9) de type bras de potence constitués de deux poignées de commande (11, 12) associées à chaque fois à une main d'un opérateur pour l'agencement d'organes d'actionnement pour l'ajustement ou le changement de la direction d'avance et/ou de la vitesse d'avance de la machine de travail (1) et éventuellement des appareils de travail attelés, des roues (6, 7) étant prévues au niveau d'un essieu (5) disposé transversalement à la direction d'avance (F, F'), les appareils de travail étant connectés à l'unité d'entraînement (3), au moins l'une des poignées de commande (12) étant connectée à un dispositif d'homme mort (16) automatique commutant, par un organe d'actionnement (21), en mode inactif l'unité d'entraînement (3) respectivement, coupant le moteur d'entraînement (2), lorsque ladite une main n'est plus en contact avec la poignée de commande (12), **caractérisée** en ce l'autre poignée de commande (11) est réalisée par un dispositif d'homme mort supplémentaire (20) de même effet, connecté à l'unité d'entraînement (3) ou au moteur d'entraînement (2), le dispositif d'homme mort supplémentaire (20) étant prévu au niveau d'une poignée de commande (11) réalisée poignée rotative (22) connectée à un organe d'actionnement pour l'ajustement ou le changement de la vitesse et supportée l'autre poignée de commande (11) et pouvant tourner autour de celle-ci, la poignée rotative (24) étant disposée au niveau d'un support (25) pouvant pivoter à l'encontre d'une force de rappel sur une portion longitudinale (24) de l'autre poignée de commande (11) transversalement à l'axe de rotation de la poignée rotative (22) et présentant un dispositif d'actionnement (31) pour l'actionnement d'un commutateur (26) de préférence électrique, fixé à la poignée de commande (11).

2. Machine de travail selon la revendication 1, **caractérisée en ce que** le support (25) pouvant pivoter est réalisé de manière à pouvoir coulisser sous forme de tube cylindrique par le biais de la poignée de commande (11) se rétrécissant de préférence sous forme conique le long du support (25) vers la poignée rotative (22).

3. Machine de travail selon la revendication 1 ou 2, **caractérisée en ce que** le commutateur (26) fixé à la poignée de commande (11) et le dispositif d'actionnement (31) sont disposés à l'intérieur de la poignée rotative (22).

4. Machine de travail selon l'une quelconque des revendications 1 à 3, **caractérisée en ce que** la poignée rotative (22) est fixée sur un arbre creux (33) supporté de manière rotative sur le support (25), réalisé avec une roue conique (34) ou une roue hélicoïdale de l'organe d'actionnement (31) prévu pour l'ajustement et/ou le changement de vitesse de la machine de travail (1).

5. Machine de travail selon l'une quelconque des revendications 1 à 4, **caractérisée en ce que** le tube réalisé sous forme de support (25) est poussé dans la direction longitudinale de la poignée de commande (11) s'étendant sur celle-ci et présente dans la région du commutateur (26) une ouverture (35) pour la fixation du commutateur (26) à la poignée de commande (11), par le biais de laquelle ouverture le dispositif d'actionnement (31) fixé au tube (25) fait saillie.
